# EUROPÄISCHE PATENTSCHRIFT

(11) **EP 0 890 118 B1**
(45) Veröffentlichungstag und Bekanntmachung des Hinweises auf die Patenterteilung: **14.06.2000**
(21) Anmeldenummer: 97920580.4
(22) Anmeldetag: 25.03.1997
(51) Int. Cl.: G02B 3/14, G02B 26/08

(54) **OPTOELEKTRONISCHES ABBILDUNGSSYSTEM FÜR INDUSTRIELLE ANWENDUNGEN**
OPTO-ELECTRONIC IMAGING SYSTEM FOR INDUSTRIAL APPLICATIONS
SYSTEME D'IMAGERIE OPTOELECTRONIQUE POUR APPLICATIONS INDUSTRIELLES

(30) Priorität: 26.03.1996 DE 19613709
(43) Veröffentlichungstag der Anmeldung: 13.01.1999
(73) Patentinhaber: MANNESMANN Aktiengesellschaft, 40213 Düsseldorf (DE)
(72) Erfinder: WIDL, Andreas, D-81667 München (DE)
(74) Vertreter: Presting, Hans-Joachim, Dipl.-Ing.
(86) Internationale Anmeldenummer: DE9700681
(87) Internationale Veröffentlichungsnummer: WO9736193

(56) Entgegenhaltungen:
- EP-A- 0 273 568
- DE-A- 3 630 700
- US-A- 4 407 567
- US-A- 4 802 746
- US-A- 4 989 958

## Beschreibung

Die Erfindung betrifft ein optoelektronisches Abbildungssystem für industrielle Anwendungen mit mindestens zwei voneinander beabstandeten optischen Linsen und einem elektronischen Bildsensor, wobei die Abbildungsschärfe auf dem Bildsensor und der Abbildungsmaßstab (Zoom) durch eine Steuereinheit maschinell einstellbar sind.

Derartige Abbildungssysteme sind in jeder Videokamera enthalten. Das Objektiv einer solchen Kamera ist im Regelfall mit einer Einrichtung zur manuellen und automatischen Scharfstellung (Autofokus) sowie zur motorischen Veränderung des Abbildungsmaßstabes ausgerüstet. Die optischen Linsen des Objektivs sind aus massiven Glaskörpern gebildet. Um die Scharfstellung und das Zoomen zu ermöglichen, werden die axialen Abstände der einzelnen Linsen oder Linsengruppen im Objektiv entlang der optischen Achse mittels eines Elektroantriebs zueinander verändert. Der Aufwand hierfür ist nicht nur hinsichtlich der feinmechanischen Antriebstechnik, sondern auch hinsichtlich des Platzbedarfs für das Objektiv (Bauvolumen) beträchtlich. Zur Bereitstellung der Meßwerte für die Zoom-Funktion kommen üblicherweise Infrarot-Sensoren zum Einsatz.

Insbesondere für industrielle Anwendungen ist man daran interessiert, möglichst kleine und billig herstellbare Geräte zur Verfügung zu haben. Diese können beispielsweise in der Sicherheitstechnik und in der Prozeßleittechnik zum Schutz von Anlagen oder zur Beobachtung von Prozessen Verwendung finden. Auch für transporttechnische sowie verkehrstechnische und fertigungstechnische Aufgaben (z.B. Montage) sind optoelektronische Abbildungssysteme von großem Interesse. Für viele Anwendungsfälle sind dabei die Anforderungen an die Exaktheit der Bildwiedergabe und das Auflösungsvermögen geringer, als dies beispielsweise bei handelsüblichen Foto- und Videogeräten der Fall ist.

Seit vielen Jahren ist es bekannt, daß Möglichkeiten zur Herstellung von optischen Linsen gegeben sind, deren Brennweite durch flexible Verformung des Linsenkörpers, also durch Veränderung der Oberflächenwölbungen veränderbar sind. Beispielsweise offenbart die US 3 161 718 eine flexible Linse, die aus zwei unmittelbar aneinandergelegten und lediglich durch eine lichtdurchlässige Scheibe voneinander getrennten Hohlkörpern besteht. Die Außenoberflächen der beiden Hohlkörper werden jeweils durch eine lichtdurchlässige flexible Membran gebildet. Das Innere der beiden Hohlkörper ist mit einer wiederum lichtdurchlässigen Flüssigkeit gefüllt. Durch Vergrößerung oder Verkleinerung des Flüssigkeitsfüllvolumens ergeben sich unter Berücksichtigung des von außen auf die Membranoberfläche einwirkenden Umgebungsdrucks unterschiedliche Wölbungen der Oberflächen und damit unterschiedliche Brennweiten der Linse. Zur weiteren Beeinflussung der Wölbungsform ist in dieser Schrift eine Anordnung beschrieben, durch die die Vorspannung der Membranwände unabhängig vom Druck der Flüssigkeitsfüllung verändert werden kann.

Aus der GB 1 209 234 ist ein als Brille konzipiertes Gerät bekannt, deren Brillengläser in Form von flexiblen Linsen ausgebildet sind, die wiederum durch Veränderung ihrer Flüssigkeitsfüllung eine variable Brennweite besitzen. Weiterhin ist in der Veröffentlichung "Silicone rubber applied within the eye: a preliminary study" aus Applied Optics, 1. May 1979, Vol. 18, No. 9, Seite 1305 bis 1310, die Möglichkeit für einen medizinischen Einsatz flexibler Linsen beschrieben, die die Implantierung in das menschliche Auge als Ersatz für die natürliche Linse vorsieht. In diesem Fall wird die Linse nicht mit einer Flüssigkeitsfüllung versehen, sondern besteht aus einem massiven elastischen Kunststoffmaterial. Weiterhin ist auf die Veröffentlichung "Variable-focus liquid-filled optical lens" aus Applied Optics, 1. August 1993, Vol. 32, No. 22, Seite 4181 bis 4186, hinzuweisen, in der Untersuchungsergebnisse hinsichtlich der Abbildungseigenschaften flüssigkeitsgefüllter flexibler Linsen dargestellt werden.

In der FR 26 34 287 wird ein Objektiv beschrieben, das zwei oder mehr flüssigkeitsgefüllte Linsen aufweist, deren Oberflächenwölbung durch einen mittels Schraubenverstellung einstellbaren Dosierkolben für die Flüssigkeit manuell verändert werden kann.

Aus der US 4 407 567 ist ein optoelektronisches Abbildungssystem bekannt, daß drei in festem Abstand entlang der optischen Achse angeordnete flexible Linsen aufweist. Die Oberflächenwölbung der flexiblen Linsen kann durch Piezoaktoren kontrolliert und reversibel verändert werden. Dazu ist eine Datenverarbeitungseinrichtung vorgesehen, die zur Einstellung bestimmter Oberflächenwölbungen jeweils eine entsprechende elektrische Spannung an die Piezoaktoren anlegt. Die Datenverarbeitungseinrichtung ist mit zwei Eingabeeinrichtungen versehen, durch die vom Benutzer des Abbildungssystems Stellwerte zur Einstellung des Abbildungsmaßstabs (Zoom) und zur Scharfstellung eingegeben werden können. Die flexiblen Linsen und die Aktorik bilden mit der Datenverarbeitungseinrichtung eine gerätetechnische Einheit. Wie an Hand der näheren Angaben in den Ausführungsbeispielen, die als Alternative zu den flexiblen Linsen mit flexiblen Hohlspiegeln arbeiten, erkennbar ist, kann dieses optoelektonisches Abbildungssystem beträchtliche Ausmaße annehmen, da der Abstand der äußersten Hohlspiegel voneinander mit 0,4 bis 3m angegeben ist.

Aus der US 4 802 746 ist ein weiteres optoelektronisches Abbildungssystem bekannt, bei dem die Abbildung auf einen elektronischen Bildsensor erfolgt. Die Optik dieses Abbildungssystem besteht aus zwei konventionellen Linsen und einer flexiblen Linse, deren Oberflächenwölbung wiederum durch Piezoaktoren kontrolliert und reversibel veränderbar ist. Die elektrische Spannung zur Einstellung der Piezoaktoren wird über einen Mikroprozessor geregelt. Dieser Mikroprozessor wählt seine Stellinformationen für die Spannungsversorgung anhand der Ergebnisse einer Bildschärfe-Ermittlungseinheit, die die Bildschärfe durch Auswertung einzelner Bildausschnitte bei kurzzeitiger Veränderung der Oberflächenwölbung der flexiblen Linse detektiert. Eine Zoom-Funktion wäre mit diesem System, daß lediglich eine einzige flexiblen Linse vorsieht, ohne eine axiale Verschiebung der konventionellen Linsen nicht möglich.

Aufgabe der Erfindung ist es, ein für industrielle Anwendungen geeignetes optoelektronisches Abbildungssystem der eingangs genannten Art anzugeben, das möglichst billig herstellbar ist, ein vergleichsweise geringes Bauvolumen aufweist und eine dem Bedarfsfall angepaßte Abbildungsqualität ermöglicht.

Gelöst wird diese Aufgabe für ein gattungsgemäßes Abbildungssystem mit den kennzeichnenden Merkmalen des Patentanspruchs 1. Durch die Merkmale der Unteransprüche 2 bis 17 ist dieses Abbildungssystem in vorteilhafter Weise weiter ausgestaltbar.

Die Erfindung sieht vor, das Objektiv, das die Abbildung auf dem elektronischen Bildsensor in hinreichender Schärfe und im gewünschten Abbildungsmaßstab sicherstellen soll, mit mindestens zwei flexiblen Linsen zu versehen, die im Abstand voneinander entlang der optischen Achse des Objektivs angeordnet sind. Durch Veränderung der Oberflächenwölbung der flexiblen Linsen durch von außen initiierte mechanische Krafteinwirkung (Aktorik) kann die Brennweite der flexiblen Linsen jeweils in der gewünschten Weise verändert werden. Die Verformung erfolgt kontrolliert und ist aufgrund der Flexibilität des Linsenmaterials reversibel. Wegen der Veränderbarkeit der Brennweiten kann die bisher bei konventionellen Objektiven erforderliche Verschiebung von einzelnen Linsen oder Linsengruppen entlang der optischen Achse vollständig entfallen. Das bedeutet, daß der dazu erforderliche gerätetechnische Aufwand sich erübrigt. Die flexiblen Linsen weisen also einen festen axialen Abstand voneinander auf.

Ein wesentliches Merkmal der Erfindung ist darin zu sehen, daß einerseits die Aktorik und andererseits der Bildsensor mit einer elektronischen Datenverarbeitungseinrichtung signaltechnisch verbunden sind, wobei die Programmierung der Datenverarbeitungseinrichtung derart eingerichtet ist, daß die von dem Bildsensor an die Datenverarbeitungseinrichtung gelieferten Signale im Sinne einer Autofokus-Funktion ausgewertet werden: So können etwa unscharfe Kanten und Linien mittels Gradientenbildanalyse (z.B. durch Schwerpunktbestimmung) korrigiert werden. Generell lassen sich aus einer Analyse des Grauwertbildes, insbesondere der Kantenmenge und Kantenschärfe, Stellgrößen für die Objektweitenregelung ableiten, so daß zumindest bei kleinen Veränderungen der Objektweite, auf einfache Weise ein automatisches Einstellen der Bildschärfe (Autofokus) ermöglicht wird. Das erfindungsgemäße Abbildungssystem benötigt somit keine zusätzliche Sensorik (z.B. Infrarot-Sensor) für die Autofokus-Funktion.

Nach einem weiteren Merkmal der Erfindung ist vorgesehen, daß die elektronische Datenverarbeitungseinrichtung durch entsprechende Stellsignale an die Aktorik die Oberflächenkrümmung und somit die Brennweiten der flexiblen Linsen gezielt so einstellt, daß sich ein gewünschter Abbildungsmaßstab (Zoom-Funktion) ergibt. Dies läßt sich mit relativ geringem Aufwand dadurch realisieren, daß in einem Speicher der Datenverarbeitungseinrichtung für die verschiedenen gewünschten Zoom-Stufen Kombinationen der Einstellwerte für die jeweils erforderlichen Oberflächenkrümmungen der flexiblen Linsen, d.h. für die jeweils an die Aktorik zu gebenden Stellsignale abgelegt werden. Diese Einstellwerte lassen sich durch praktische Versuche und/oder mathematische Simulationen, also in einer einmaligen Aktion ermitteln und einspeichern. Selbstverständlich können die Einstellwerte anstatt als Wertetabellen auch in funktionaler Form im Speicher der Datenverarbeitungseinrichtung abgelegt werden.

Schließlich ist es für das Wesen der vorliegenden Erfindung kennzeichnend, daß das Abbildungssystem insgesamt als kompakte gerätetechnische Einheit aufgebaut ist, die nicht nur das System der flexiblen Linsen und den Bildsensor, sondern auch die elektronische Datenverarbeitungseinrichtung und die Aktorik umfaßt. Dadurch erhält man einen äußerst leistungsfähigen optoelektronischen "Sensor", der aufgrund seiner immanenten Intelligenz (integrierte elektronische Datenverarbeitungseinrichtung) hinreichend gute Bildsignale liefert und lediglich einen kleinen Bruchteil des für eine entsprechende Einrichtung in herkömmlicher Technik erforderlichen Raumbedarfs beansprucht. Die drastische Verringerung des Bauvolumens geht dabei auch mit einer deutlichen Verringerung der Herstellkosten einher. Besonders vorteilhaft ist es, wenn die Datenverarbeitungseinrichtung, die als Mikrocomputer ausgebildet ist, auf einem gemeinsamen elektronischen Chip zusammen mit dem Bildsensor angeordnet wird. Dies ist zweckmäßig sowohl im Hinblick auf möglichst geringe Herstellkosten (Montage), als auch im Hinblick auf die Zuverlässigkeit und Verarbeitungsgeschwindigkeit des erfindungsgemäßen Abbildungssystems.

Besonders vorteilhaft ist es, die Programmierung der elektronischen Datenverarbeitungseinrichtung im Sinne einer elektronischen Bildkorrektureinheit zu erweitern. Eine entsprechende Bildkorrektur kann beispielsweise durch sogenannte Pixeloperationen Verzerrungen infolge unzulänglicher Einstellung der Oberflächenwölbung der flexiblen Linsen kompensieren oder zumindest minimieren. Mit den an sich bekannten Methoden der elektronischen Bildbearbeitung läßt sich die Bildkorrektureinheit ohne weiteres kalibrieren. So kann diese Korrektureinheit beispielsweise im Falle eines Objektes mit geraden Kanten, die im Bild gekrümmt dargestellt sind, so eingestellt werden, daß die Abbildung unter den gegebenen Bedingungen weitgehend originalgetreue gerade Kanten mit entsprechenden Proportionen aufweist. In den meisten Fällen ist der hierfür zu treibende Aufwand sehr gering, da, wie bereits eingangs festgestellt, die Anforderungen an die Genauigkeit der Abbildungen nicht allzu hoch sind. Da die Art und Weise der Verzerrung im voraus bekannt ist, können entsprechende Korrekturwerte in Abhängigkeit von den Einstellwerten der flexiblen Linsen im Speicher der elektronischen Datenverarbeitungseinrichtung abgelegt werden. Es ist auch möglich, ein scharfes Bild durch Bildaddition zu erzeugen. Dabei wird der Effekt genutzt, daß bei unterschiedlichen Einstellungen der Brennweite der flexiblen Linsen (unter Beibehaltung der Zoom-Stufe des Abbildungssystems) einzelne Bildbereiche abwechselnd scharf oder unscharf sind. Wenn z.B. in einer Einstellung der Zentralbereich, in einer zweiten Einstellung ein um das Zentrum liegender mittlerer Bereich und in einer dritten Einstellung der Randbereich des erzeugten Bildes scharf sind, dann kann durch Addition der jeweils scharfen Bereiche, also aus drei Bildern ein insgesamt hinreichend scharfes Bild von der elektronischen Datenverarbeitungseinrichtung zusammengesetzt werden. Durch die Möglichkeit der elektronischen Bildkorrektur innerhalb des kompakten Abbildungssystems der Erfindung kann ein peiswertes Zoom-Objektiv zur Verfügung gestellt werden, das im Bedarfsfall extreme Weitwinkeleigenschaften (Fischaugen-Objektiv) bei weitgehender Kompensation der damit zwangsläufig verbundenen Bildverzerrungen bietet, ohne daß ein aufwendiges spezielles Rechnersystem für die Bildnachbearbeitung erforderlich ist.

In einer anderen vorteilhaften Weiterbildung der Erfindung ist vorgesehen, die elektronische Datenverarbeitungseinrichtung für eine elektronische Helligkeitsregelung zu nutzen. Bei einem z.B. aus zwei flexiblen Linsen mit dazwischen geschalteter fester Blende bestehendem Abbildungssystem führen unterschiedliche Oberflächenwölbungen der Linsen zu unterschiedlichen effektiven Linsenapperturen und somit zu unterschiedlichen Lichtmengen, die auf den Bildsensor treffen. Folglich ändert sich die Bildhelligkeit entsprechend. Beispielsweise durch Computersimulation eines solchen Zoom-Objektivs ist es möglich, den Zusammenhang zwischen den jeweiligen Einstellwerten der Aktorik (d.h. der jeweiligen Linsenkrümmung) und der Lichtintensität auf dem Bildsensor zu bestimmen. Die daraus ableitbaren Korrekturwerte zur Kompensation derartiger Schwankungen der Bildhelligkeit können in entsprechender Weise wie bei der Korrektur von Bildverzerrungen in Abhängigkeit von den Linseneinstellwerten im Speicher der elektronischen Datenverarbeitungseinrichtung abgelegt werden. Die Korrektur der Bildhelligkeit kann dabei durch eine Veränderung der Belichtungszeit am Bildsensor und durch geeignete Verstärkung der Bildsensorsignale geregelt werden.

Zusätzlich zu den mindestens zwei flexiblen Linsen kann ein erfindungsgemäßes Abbildungssystem auch noch mit einer oder mehreren konventionellen Linsen mit fester Brennweite bestückt werden. Dies kann sinnvoll sein, um den möglichen Bereich der Brennweitenverstellung und/oder den Zoombereich zu vergrößern. Außerdem läßt sich im Bedarfsfall der Grad der Aberration reduzieren.

Grundsätzlich ist es auch möglich, Spiegel mit flexibler Oberfläche, deren Wölbung maschinell kontrolliert einstellbar ist, im Sinne der Erfindung als "flexible Linsen" einzusetzen. Da dabei aber der Bildsensor nicht wie bei einem Objektiv mit lichtdurchlässigen optischen Linsen auf der optischen Achse angeordnet werden kann, sondern seitlich versetzt in den durch Reflexion abgelenkten Strahlengang des Lichtes zu setzen ist, ergeben sich aufgrund des Abbildungsverhaltens von gekrümmten Spiegeloberflächen starke Aberrationen und dadurch z.B. erhebliche Verzerrungen des Abbildes. Bevorzugt im Rahmen der vorliegenden Erfindung sind daher flexible Linsen, die entweder in dem für den Strahlengang des Lichtes genutzten Teil aus einem einheitlichen flexiblen lichtdurchlässigen Material bestehen oder aber als flüssigkeitsgefüllte Hohlkörper ausgebildet sind, wobei mindestens eine, vorzugsweise beide äußeren Oberflächen durch Membranwände eines lichtdurchlässigen flexiblen Materials gebildet sind. Im Falle flüssigkeitsgefüllter flexibler Linsen kommen für die Füllflüssigkeit insbesondere solche Flüssigkeiten in Frage, die eine geringe Dispersion aufweisen und somit die chromatische Aberration minimieren. Da sich der statische Druck der Füllflüssigkeit auf die Verformung der vergleichsweise dünnen Membranwände auswirkt, sollte das Flüssigkeitsvolumen insgesamt möglichst klein gehalten werden, um unerwünschte und schlecht kontrollierbare Verformungen in nennenswertem Maße von vornherein auszuschließen. Eine vorteilhafte Ausführungsform der flüssigkeitsgefüllten Linse sieht vor, die Membranwände nicht mit gleichmäßiger Dicke zu versehen, sondern in radialer Richtung von der optischen Achse zur Peripherie der Linse hin unterschiedlich groß zu wählen. Zur Kompensation von Abbildungsfehlem kann es zweckmäßig sein, auf der Oberfläche der flexiblen Linse z.B. diffraktive Strukturen vorzusehen, die in Verbindung mit refraktiven Komponenten zur Reduktion chromatischer Aberrationen führen. Weiterhin könnte der Berechnungsindex der Linse radiusabhängig veränderlich gestaltet werden (Gradientenlinse), um monochromatische Aberrationen abzumildern.

Bei flüssigkeitsgefüllten flexiblen Linsen kann die Veränderung der Oberflächenform, also der Wölbung der Linse in an sich bekannter Weise durch Veränderung des Füllvolumens beeinflußt werden. Hierzu sind entsprechende Flüssigkeitsfördereinrichtungen, beispielsweise digital angesteuerte Dosierpumpen vorzusehen. Da für die meisten Anwendungsfälle der Durchmesser der flexiblen Linsen klein gehalten werden kann, sind die zur Verstellung der Brennweite in das Innere der Linse hinein- oder daraus herauszufördernden Flüssigkeitsvolumina sehr klein. Daher kommen hierfür auch mikroaktorische Pumpen (z.B. piezoelektrische Pumpen) in Frage. Man kann auch ein völlig abgeschlossenes Flüssigkeitssystem einsetzen, bei dem lediglich durch äußere Krafteinwirkung gegen die Federkraft der flexiblen Linse durch Verformung das Volumen eines Flüssigkeitsspeichers verändert wird. Als Füllflüssigkeit eignet sich beispielsweise Dimethylsiliconöl.

Im Falle der aus einem massiven einheitlichen flexiblen Material hergestellten flexiblen Linse können die zur Verformung der Linsenoberfläche bei der Einstellung der gewünschten Brennweite erforderlichen mechanischen Kräfte vorteilhaft durch Piezoaktoren aufgebracht werden. Zur Ansteuerung sind diese Aktoren ebenso wie die Flüssigkeitsfördermittel im Falle der flüssigkeitsgefüllten flexiblen Linsen signaltechnisch mit der elektronischen Datenverarbeitungseinrichtung verbunden, die die Brennweitenverstellung kontrolliert vornimmt. Um den Grad der auftretenden Aberration klein zu halten, können eine oder mehrere Blenden in den Strahlengang des erfindungsgemäßen Abbildungssystems eingeschaltet werden. Um eine Verstellbarkeit der Blendenöffnung zu ermöglichen, ohne einen unerwünschten Aufwand für einen mechanischen Verstellmechanismus in Kauf nehmen zu müssen, ist in einer Weiterbildung der Erfindung vorgesehen, eine solche Blende in ähnlicher Form zu konzipieren, wie eine flüssigkeitsgefüllte flexible Linse. Das bedeutet, daß die Blende ebenfalls als flüssigkeitsgefüllter Hohlkörper ausgebildet ist, deren Außenoberflächen von lichtdurchlässigen Membranwänden gebildet werden. Anstelle einer lichtdurchlässigen Flüssigkeitsfüllung ist hierbei jedoch eine lichtundurchlässige Flüssigkeitsfüllung vorgesehen. Weiterhin ist der axiale Abstand zwischen den beiden sich gegenüberliegenden Membranwänden vergleichsweise gering. Durch Herausfördern von Flüssigkeit aus dem Hohlraum kommt es infolge des von außen wirkenden Umgebungsdrucks zu einer konkaven Wölbung der beiden Membranwände nach innen und zu einer unmittelbaren Anlage der Membranwände aneinander im Bereich einer Kreisfläche um die optische Achse. Je nach Größe des aus dem Hohlkörper abgezogenen Flüssigkeitsvolumens ist die Kreisfläche, in der sich die Flächenberührung der Membranwände einstellt, unterschiedlich groß. Da im Bereich der Berührungsfläche keine trennende Flüssigkeit mehr vorhanden ist, stellt sich in diesem Bereich die Blendenöffnung ein.

Die Erfindung wird nachfolgend anhand der in den Figuren schematisch dargestellten Ausführungsbeispiele näher erläutert. Es zeigen:
- Fig. 1: eine flexible Linse in unterschiedlichen Verformungsstufen,
- Fig. 2: eine Optik mit zwei flexiblen und einer konventionellen Linse,
- Fig. 3: unterschiedliche Membranformen für flexible Linsen,
- Fig. 4: eine flexible Linse mit einer profilierten und einer gleichmäßig dicken Membranwand,
- Fig. 5 und 6: ein erfindungsgemäßes Abbildungssystem in unterschiedlichen Betriebszuständen,
- Fig. 7 und 8: eine Blende in geschlossenem bzw. geöffnetem Zustand und
- Fig. 9: ein Blockschaltbild eines erfindungsgemäßen Abbildungssystems.

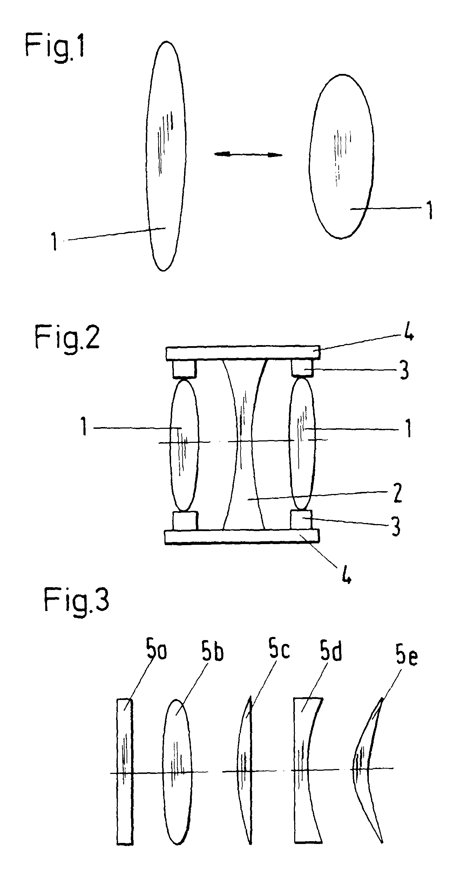

Die in Fig. 1 dargestellte flexible Linse besteht aus einem einheitlichen flexibel verformbaren elastischen Material, das lichtdurchlässig ist und refraktive Eigenschaften aufweist. Grundsätzlich sollte hierfür ein Material (z.B. Polymere) gewählt werden, das neben einer guten Formänderungsfähigkeit eine starke Brechkraft bei möglichst geringer Dispersion aufweist. Außerdem sollten diese Materialeigenschaften möglichst über sehr große Zeiträume erhalten bleiben. Durch von außen an der Peripherie der Linsen aufgebrachte Druck- oder Zugkräfte läßt sich die Oberflächenwölbung einer solchen Linse verändern und damit die Brennweite der Linse auf unterschiedliche Werte einstellen. In der linken Bildhälfte ist die im Querschnitt dargestellte Linse durch radial nach außen wirkende Zugkräfte zu einem relativ flachen Körper auseinandergezogen, während in der rechten Hälfte der Zustand dargestellt ist, daß durch äußere Druckkräfte der Linsenkörper im Durchmesser verkleinert und die Dicke und damit auch die Oberflächenkrümmung vergrößert ist.

In Fig. 2 ist in einem einfachen Ausführungsbeispiel eine Optik für ein erfindungsgemäßes Abbildungssystem wiedergegeben, das zwei flexible Linsen 1 aufweist, die im axialen Abstand voneinander entlang der optischen Achse angeordnet sind. Das Gehäuse, in dem die Linsen untergebracht sind, ist mit dem Bezugszeichen 4 bezeichnet. Zwischen den beiden flexiblen Linsen 1 ist eine konventionelle Glaslinse 2 mit beidseitig konkaver Wölbung angeordnet. Eine solche Linse 2 mit fester Brennweite ist insbesondere dann vorteilhaft, wenn kleine Linsenaperturen, kleine Änderungen der Linsenbrennwerte und große Objektweiten vorliegen. In vielen Fällen läßt sich durch eine zusätzliche konventionelle Linse die Notwendigkeit einer Umschaltung der flexiblen Linsen 1 vom konkaven in den konvexen Bereich oder umgekehrt vermeiden. Um den Grad der Wölbung der beiden flexiblen Linsen 1 zu beeinflussen, sind im Bereich des Linsenumfangs jeweils Piezoaktoren 3 angeordnet, die in der Darstellung schematisch angedeutet sind.

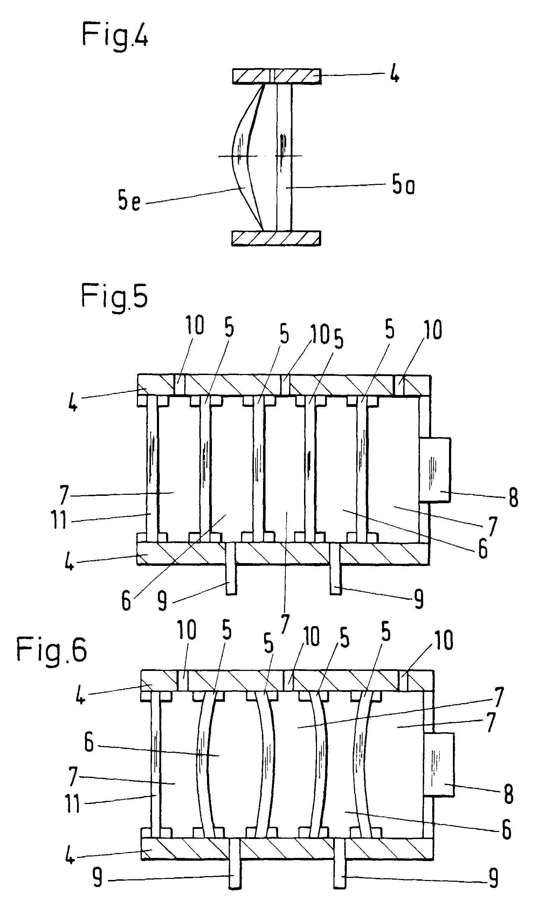

Zur Herstellung einer flexiblen Linse mit Flüssigkeitsfüllung können Membranwände mit unterschiedlichen Querschnittsformen verwendet werden. Dies kann insbesondere in Zusammenhang mit der Verminderung optischer Aberrationen vorteilhaft sein. In Fig. 3 ist eine Vielzahl unterschiedlich geformter Membranen 5a bis 5e dargestellt. Fig. 4 zeigt ein Ausführungsbeispiel, bei dem zwei unterschiedliche Membranwände 5e, 5a zum Einsatz kommen. Die Membranwand 5a ist von der einfachsten Art und weist eine gleichmäßig große Dicke über den gesamten Querschnitt auf. Demgegenüber nimmt die Dicke der Membranwand 5e von der optischen Achse aus in radialer Richtung nach außen hin kontinuierlich ab. Außerdem ist die Membranwand im unbelasteten Zustand nicht vollständig eben ausgebildet, sondern weist bereits eine konvexe Krümmung nach außen auf.

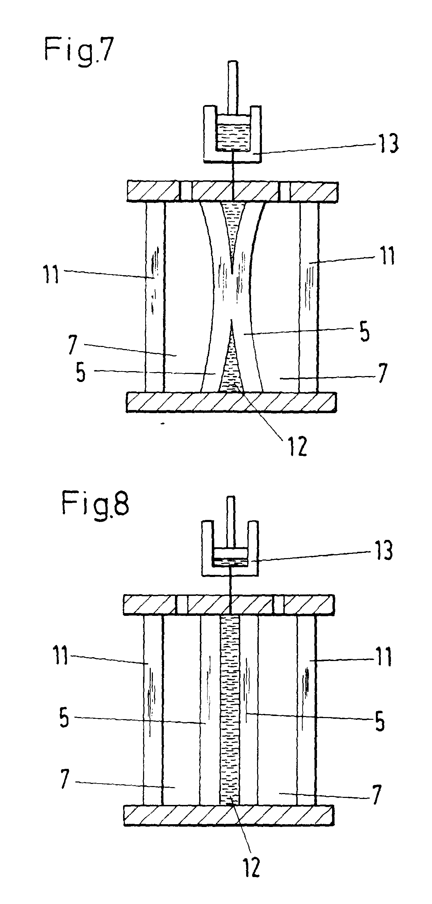

Ein Abbildungssystem mit zwei flexiblen flüssigkeitsgefüllten Linsen ist in unterschiedlichen Betriebszuständen in den Fig. 5 und 6 dargestellt. Auf der Lichteintrittsseite ist das Gehäuse 4, in dem die Optik untergebracht ist, mit einer lichtdurchlässigen starren Scheibe 11 nach außen verschlossen. Im axialen Abstand voneinander sind zwei flexible Linsen angeordnet, die einen von jeweils zwei Membranwänden 5 und im Umfangsbereich durch das Gehäuse 4 eingeschlossenen Hohlraum 6 aufweisen. Durch die Zuleitungen 9 kann eine lichtdurchlässige Flüssigkeit in die beiden Hohlräume 6 eingeleitet bzw. daraus wieder abgezogen werden, so daß beiderseits der Membranwände 5 eine Druckdifferenz besteht. Zwischen den beiden flexiblen Linsen und zu deren linker bzw. rechter Seite ist jeweils ein Hohlraum 7 vorgesehen, der vorzugsweise mit Gas (z.B. Luft) gefüllt ist. Durch Öffnungen 10 im Gehäuse 4 kann in diesen Hohlräumen 7 ein Druckausgleich mit der Umgebung erfolgen. An der rechten Stirnwand des Gehäuses 4 ist ein elektronischer Bildsensor 8 schematisch angedeutet. Im Betriebsfall nehmen die beiden flexiblen Linsen eine gewölbte Außenform an, wie sie exemplarisch in Fig. 6 dargestellt ist. Durch Einfüllung eines zusätzlichen Flüssigkeitsvolumens in die linke flexible Linse wölben sich deren Membranwände 5 nach außen, so daß sich eine konvexe Linsenform ergibt. Die Gasfüllung in den beiden unmittelbar benachbarten Zwischenräumen 7 kann zum Druckausgleich teilweise durch die Öffnungen 10 nach außen gelangen. Im Falle der rechten flexiblen Linse wurde ein Teil des ursprünglich im unbelasteten Zustand vorhandenen Flüssigkeitsvolumens aus dem Innenraum 6 abgezogen. Die Druckdifferenz infolge der Volumenverringerung bewirkt eine konkave Wölbung der beiden zugehörigen Membranwände 5. Anstelle eines einfachen Druckausgleichs in den unmittelbar zu einer flexiblen Linse benachbart angeordneten Zwischenräumen 7 kann auch vorgesehen sein, den Innendruck in diesen Zwischenräumen 7 gezielt zu beeinflussen (Überdruck oder Unterdruck), um die Verformung der jeweiligen Membranwände zu unterstützen. Prinzipiell ist es auch möglich, wenngleich wegen der schwierigeren Dosierbarkeit weniger zweckmäßig, für die Flüssigkeitsfüllung der flexiblen Linsen jeweils nur einen Druckausgleich vorzusehen und das jeweilige Füllvolumen allein durch den in den Zwischenräumen 7 eingestellten Mediendruck zu beeinflussen. Durch Veränderung des Wölbungsgrades der flexiblen Linsen, der durch eine nichtdargestellte elektronische Datenverarbeitungseinrichtung kontrolliert eingestellt wird, lassen sich die Brennweiten der beiden flexiblen Linsen gezielt so einstellen, daß das jeweilige Objekt auf dem Bildsensor 8 scharf dargestellt wird. Außerdem ist es möglich, durch geeignete Brennweitenverstellung den Abbildungsmaßstab auf dem Bildsensor 8 in gewünschter Weise zu verändern. Hierzu bedarf es keinerlei axialer Verschiebungen der beiden Linsen.

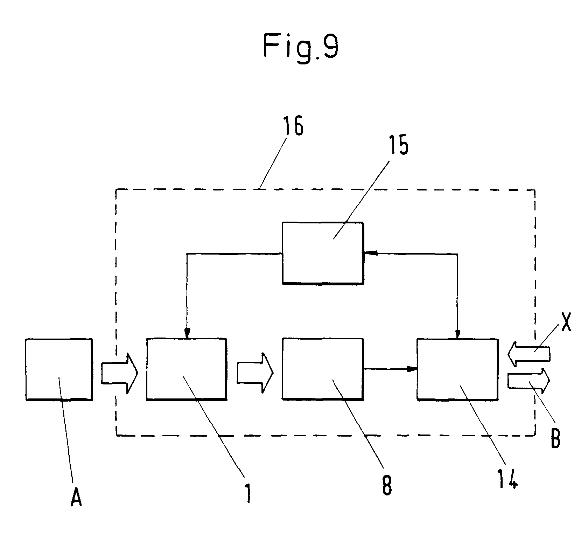

Das erfindungsgemäße Abbildungssystem läßt sich weiter dadurch verbessern, daß in den Strahlengang des Lichtes eine Blende mit nach Möglichkeit veränderbarer Blendenöffnung eingeschaltet wird. Ein Ausführungsbeispiel für eine geeignete Blende ist in schematischer Weise in den Fig. 7 und 8 dargestellt worden. Fig. 7 zeigt die Blende in geschlosssenem Zustand. Sie ist wiederum in einem Gehäuse 4 untergebracht, das auf den beiden Stirnseiten z.B. mit starren lichtdurchlässigen Abdeckscheiben 11 versehen ist. Die eigentliche Blende besteht in ähnlicher Weise wie eine flüssigkeitsgefüllte fexible Linse aus einem zwischen dem Gehäuse 4 und zwei eng voneinander beabstandeten, lichtdurchlässigen elastischen Membranen 5 eingeschlossenen Hohlraum, der mit einer Flüssigkeit 12 gefüllt ist. Die Flüssigkeit 12 ist lichtundurchlässig. Wenn durch die Flüssigkeitsfördereinrichtung 13 Flüssigkeit aus dem Hohlraum der Blende nach außen abgezogen wird, wölben sich die beiden Membranwände 5 gegeneinander und berühren sich in einer Kreisfläche um die optische Achse infolge des auf die Membranwände 5 einwirkenden Außendrucks. Zur Unterstützung der Verformung kann wie bei den flexiblen Linsen auch gezielt eine Druckerhöhung in den Zwischenräumen 7 vorgenommen werden. Da in der kreisförmigen Berührungsfläche der beiden Membranwände 5 keine lichtundurchlässige Flüssigkeit mehr vorhanden ist, kann in diesem Bereich der Durchtritt von Lichtstrahlen erfolgen. Die Kreisfläche um die optische Achse der Blende stellt somit die Blendenöffnung dar. Je nach Stärke der Verformung der elastischen Membranwände 5 kann die Blendenöffnung auf unterschiedlich große Werte eingestellt werden.

In Fig. 9 ist das erfindungsgemäße Abbildungssystem 16 als Blockschaltbild dargestellt. Das Abbildungssystem 16 besteht aus einem System flexibler Linsen 1 (ggf. mit einer oder mehreren zwischengeschalteten Blenden), dem Bildsensor 8, der elektronischen Datenverarbeitungseinrichtung 14 sowie der Aktorik 15. Das von diesem Abbildungssystem 16 abzubildende Objekt A strahlt, wie durch die flächigen Pfeile angedeutet ist, Licht in das System der flexiblen Linse 1 und durch diese hindurch auf den Bildsensor 8. Die vom Bildsensor erzeugten Bildsignale gehen in die Datenverarbeitungseinrichtung 14 ein und werden in dieser ggf. im Hinlick auf Helligkeit und Verzerrungen (in Echtzeit) korrigiert. Die von dem erfindungsgemäßen Abbildungssystem 16 nach außen z.B. an eine nicht dargestellte Anlagensteuerung abgegebenen Bildsignale sind durch den Pfeil B dargestellt. Die Sollwerte des Abbildungsmaßstabs, d.h. die jeweils gewünschten Zoom-Stufen, können von außen durch entsprechende Eingabe in die Datenverarbeitungseinrichtung 14 vorgegeben werden (Pfeil x). Entsprechend diesen Vorgaben werden aus einem nicht dargestellten Speicher der Datenverarbeitungseinrichtung 14 die für die Einstellung der flexiblen Linsen 1 benötigten Vorgabewerte ausgelesen und an die Aktorik 15 gegeben. Die Aktorik 15 stellt dann die Linsen 1 in der gewünschten Weise ein.

Ein wesentlicher Vorteil der vorliegenden Erfindung ist es, daß zur Veränderung der Brennweiten von optischen Linsen bzw. Linsengruppen keinerlei axiale Abstandsänderungen erforderlich sind und im Falle der Verwendung von Blenden auf übliche mechanische Verstellmechanismen, wie sie aus der Kameratechnik bekannt sind, verzichtet werden kann. Dadurch ist es möglich, ein Abbildungssystem zu konzipieren, das außerordentlich kompakt aufgebaut ist und daher nur einen geringen Einbauraum erfordert. Im Bedarfsfall ist es ohne weiteres möglich, durch Maßnahmen der elektronischen Bildkorrektur eine Abbildungsgenauigkeit zu erzielen, die industriellen Anwendungen mit gesteigerten Anforderungen in dieser Hinsicht gerecht werden. Der Verzicht auf übliche feinmechanische Antriebe bringt eine wesentliche Einsparung an Herstellkosten mit sich. Dies ermöglicht es beispielsweise, eine Miniaturaufnahmevorrichtung für die digitale Dokumentenarchivierung mit hinreichender Leistungsfähigkeit zu sehr niedrigen Kosten zu entwickeln, wobei eine solche Vorrichtung wegen ihres kleinen Bauvolumens z.B. in die Konstruktion einer Schreibtischlampe integriert werden könnte.

## Patentansprüche

1. Optoelektronisches Abbildungssystem für industrielle Anwendungen mit mindestens zwei voneinander beabstandeten optischen Linsen (1, 2), von denen mindestens zwei als flexible Linsen (1), deren Oberflächenwölbung durch von außen mittels einer Aktorik (15) initiierte Krafteinwirkung kontrolliert und reversibel veränderbar ist, ausgebildet und in Richtung der optischen Achse zueinander unverschieblich angeordnet sind, wobei die Abbildungsschärfe und der Abbildungsmaßstab (Zoom) maschinell einstellbar sind, durch eine Datenverarbeitungseinrichtung (14), die signaltechnisch mit der Aktorik (15) der flexiblen Linsen (1) verbunden ist, wobei die Datenverarbeitungseinrichtung (14) eine Speichereinrichtung aufweist, in der Werte für die Einstellung der Aktorik (15) zur Veränderung der Brennweiten der flexiblen Linsen (1) im Sinne der Zoom-Funktion hinterlegt sind,
dadurch gekennzeichnet,
- daß ein elektronischer Bildsensor (8) zur Aufnahme der Abbildung vorgesehen ist,
- daß der Bildsensor (8) signaltechnisch mit der Datenverarbeitungseinrichtung (14) verbunden ist,
- daß die Datenverarbeitungseinrichtung (14) Signale für eine Autofokus-Funktion liefert,
- daß die Datenverarbeitungseinrichtung (14) und der Bildsensor (8) auf einem gemeinsamen elektronischen Chip angeordnet sind und
- daß die flexiblen Linsen (1) zusammen mit der Aktorik (15), dem Bildsensor (8) und der Datenverarbeitungseinrichtung (14) eine kompakte gerätetechnische Einheit (16) bilden

2. Abbildungssystem nach Anspruch 1,
dadurch gekennzeichnet,
daß die Datenverarbeitungseinrichtung (14) im Sinne einer Bildkorrektureinheit zur Kompensation von optischen Abbildungsfehlern, insbesondere von Verzerrungen infolge unzulänglicher Einstellung der Oberflächenwölbung der flexiblen Linsen (1), programmiert ist.

3. Abbildungssystem nach einem der Ansprüche 1 bis 2,
dadurch gekennzeichnet,
daß die Programmierung der Datenverarbeitungseinrichtung (14) darauf eingerichtet ist, die Bildhelligkeit des vom Bildsensor (8) aufgenommenen Bildes in Abhängigkeit von den jeweiligen Werten der Einstellung der Aktorik (15) (d.h. von der Oberflächenwölbung der flexiblen Linsen (1)) zu regeln.

4. Abbildungssystem nach Anspruch 3,
dadurch gekennzeichnet,
daß die Helligkeitsregelung durch Beeinflussung der Belichtungszeit und der Verstärkung der vom Bildsensor (8) gelieferten Signale erfolgt.

5. Abbildungssystem nach einem der Ansprüche 1 bis 4,
dadurch gekennzeichnet,
daß die flexiblen Linsen (1) in dem für den Strahlengang des Lichtes genutzten Teil aus einem einheitlichen flexiblen, lichtdurchlässigen Material gebildet sind.

6. Abbildungssystem nach einem der Ansprüche 1 bis 4,
dadurch gekennzeichnet,
daß die flexiblen Linsen als flüssigkeitsgefüllte Hohlkörper (6) ausgebildet sind, wobei mindestens eine der im Strahlengang liegenden äußeren Oberflächen der Linse jeweils als flexible Membranwand (5, 5a bis 5e) aus einem lichtdurchlässigen flexiblen Material gebildet ist.

7. Abbildungssystem nach Anspruch 6,
dadurch gekennzeichnet,
daß beide äußeren Oberflächen der flexiblen Linse als flexible Membranwand (5, 5a bis 5e) ausgebildet sind.

8. Abbildungssystem nach einem der Ansprüche 6 bis 7,
dadurch gekennzeichnet,
daß die Flüssigkeit im Inneren des Hohlkörpers (6) eine geringe Dispersion aufweist.

9. Abbildungssystem nach einem der Ansprüche 6 bis 8,
dadurch gekennzeichnet,
daß das Innenvolumen des Hohlkörpers (6) zur engen Begrenzung des hydrostatischen Drucks der Flüssigkeit klein ist.

10. Abbildungssystem nach einem der Ansprüche 6 bis 9,
dadurch gekennzeichnet,
daß die Dicke der Membranwände (5, 5a - 5e) von der optischen Achse zur Peripherie der Linse hin unterschiedlich groß ist.

11. Abbildungssystem nach einem der Ansprüche 1 bis 10,
dadurch gekennzeichnet,
daß zur Kompensation von Aberrationen diffraktive Strukturen auf den Oberflächen der flexiblen Linsen angeordnet sind.

12. Abbildungssystem nach einem der Ansprüche 1 bis 11,
dadurch gekennzeichnet,
daß die Aktorik (15) zur Veränderung der Oberflächenwölbung der flexiblen Linse (1) durch Piezoaktoren (3) gebildet ist, die peripher an der flexiblen Linse angeordnet sind.

13. Abbildungssystem nach einem der Ansprüche 2 bis 11,
dadurch gekennzeichnet,
daß die Oberflächenwölbung der flexiblen Linse durch Beeinflussung des Füllvolumens des Hohlkörpers (6) mittels der als Flüssigkeitsfördereinrichtung (13) ausgebildeten Aktorik (15) veränderbar ist.

14. Abbildungssystem nach einem der Ansprüche 1 bis 13,
dadurch gekennzeichnet,
daß mindestens eine konventionelle Linse (2) in unveränderlichem axialen Abstand von den flexiblen Linsen in den Strahlengang des Lichtes eingeschaltet ist.

15. Abbildungssystem nach einem der Ansprüche 1 bis 14,
dadurch gekennzeichnet,
daß in den Strahlengang des Lichtes mindestens eine Blende eingeschaltet ist.

16. Abbildungssystem nach Anspruch 16,
dadurch gekennzeichnet,
daß die Blende aus einem Hohlkörper besteht, der zwischen zwei flexiblen, eng beabstandeten, lichtdurchlässigen Membranwänden (5) gebildet und mit einer lichtundurchlässigen Flüssigkeit (12) gefüllt ist, wobei durch Veränderung des Differenzdrucks zwischen der Außenoberfläche der Membranwände und dem Inneren des Hohlkörpers die sich gegenüberliegenden Membranwände in Form einer Kreisfläche mit einem gewünschten Durchmesser zur unmittelbaren Anlage aneinander bringbar sind.

## Claims

1. Optoelectronic imaging system for industrial applications, having at least two spaced optical lenses (1, 2), of which at least two take the form of flexible lenses (1), the surface curvature of which may be modified in controlled and reversible manner by the application of force initiated externally by means of an actuator system (15), and are arranged so as to be undisplaceable relative to one another in the direction of the optical axis, the image sharpness and image scale (zoom) being mechanically adjustable by a data processing means (14) which is connected by signalling means with the actuator system (15) of the flexible lenses (1), the data processing means (14) comprising a memory means, in which values are stored for adjustment of the actuator system (15) for the purpose of modifying the focal distances of the flexible lenses (1) in accordance with the zoom function,
characterised in that
- an electronic image sensor (8) is provided for taking the image,
- the image sensor (8) is connected by signalling means with the data processing means (14),
- the data processing means (14) delivers signals for an autofocussing function,
- the data processing means (14) and the image sensor (8) are arranged on a common electronic chip and
- the flexible lenses (1), together with the actuator system (15), the image sensor (8) and the data processing means (14), form a compact unit (16) of apparatus.

2. An imaging system according to claim 1,
characterised in that
the data processing means (14) is programmed, in the manner of an image correcting unit, to compensate for optical imaging errors, in particular for distortion arising as a consequence of inadequate adjustment of the surface curvature of the flexible lenses (1).

3. An imaging system according to any one of claims 1 to 2,
characterised in that
programming of the data processing means (14) is designed to regulate the brightness of the image taken by the image sensor (8) as a function of the respective adjustment values of the actuator system (15) (i.e. of the surface curvature of the flexible lenses (1)).

4. An imaging system according to claim 3,
characterised in that
brightness regulation is effected by influencing the exposure time and the amplification of the signals delivered by the image sensor (8).

5. An imaging system according to any one of claims 1 to 4,
characterised in that,
in the portion used for the path of the light beam, the flexible lenses (1) consist of a uniform, flexible, transparent material.

6. An imaging system according to any one of claims 1 to 4,
characterised in that
the flexible lenses take the form of fluid-filled hollow members (6), wherein in each case at least one of the outer lens surfaces lying in the beam path takes the form of a flexible membrane wall (5, 5a to 5e) made of a transparent flexible material.

7. An imaging system according to claim 6,
characterised in that
both outer flexible lens surfaces take the form of flexible membrane walls (5, 5a to 5e).

8. An imaging system according to either one of claims 6 to 7,
characterised in that
the fluid inside the hollow member (6) has low dispersion.

9. An imaging system according to any one of claims 6 to 8,
characterised in that
the internal volume of the hollow member (6) is small, in order tightly to restrict the hydrostatic pressure of the fluid.

10. An imaging system according to any one of claims 6 to 9,
characterised in that
the membrane walls (5, 5a - 5e) vary in thickness from the optical axis towards the lens periphery.

11. An imaging system according to any one of claims 1 to 10,
characterised in that
diffractive structures are arranged on the surfaces of the flexible lenses to compensate for aberrations.

12. An imaging system according to any one of claims 1 to 11,
characterised in that
the actuator system (15) for modifying the surface curvature of the flexible lens (1) takes the form of piezo actuators (3), which are arranged peripherally on the flexible lens.

13. An imaging system according to any one of claims 2 to 11,
characterised in that
the surface curvature of the flexible lens may be modified by influencing the level to which the hollow member (6) is filled, by means of the actuator system (15), which takes the form of a fluid conveying means (13).

14. An imaging system according to any one of claims 1 to 13,
characterised in that
at least one conventional lens (2) is arranged in the path of the light beam at an unalterable axial distance from the flexible lenses.

15. An imaging system according to any one of claims 1 to 14,
characterised in that
at least one diaphragm is arranged in the path of the light beam.

16. An imaging system according to claim 15,
characterised in that
the diaphragm consists of a hollow member which is formed between two flexible, closely spaced, transparent membrane walls (5) and is filled with an opaque fluid (12), wherein, by altering the differential pressure between the outer surface of the membrane walls and the inside of the hollow member, the mutually opposing membrane walls may be brought to lie directly against each other in the form of a circular surface with a desired diameter.

## Revendications

1. Système d'imagerie optoélectronique pour des applications industrielles, comportant au moins deux lentilles optiques (1,2) espacées l'une de l'autre, desquelles au moins deux sont réalisées comme lentilles souples (1), dont la courbure de surface peut être modifiée de façon réversible et contrôlée par l'action d'une force initiée de l'extérieur au moyen d'un actionneur (15) et qui sont agencées de façon non déplaçable l'une par rapport à l'autre en direction de l'axe optique, la netteté de l'image et l'échelle de l'image (zoom) pouvant être réglées de façon mécanique par un dispositif de traitement de données (14), qui est relié, par signaux, à l'actionneur (15) des lentilles souples (1), le dispositif de traitement de données (14) présentant un dispositif de mémorisation dans lequel des valeurs pour le réglage de l'actionneur (15) pour modifier les focales des lentilles souples (1) dans le sens de la fonction de zoom sont stockées,
caractérisé en ce que :
- un capteur d'image électronique (8) est prévu pour recevoir l'imagerie,
- le capteur d'image (8) est relié, par signaux, au dispositif de traitement de données (14),
- le dispositif de traitement de données (14) délivre des signaux pour une fonction d'autofocus,
- le dispositif de traitement de données (14) et le capteur d'image (8) sont agencés sur une puce électronique commune, et
- les lentilles souples (1) en même temps que l'actionneur (15), le capteur d'image (8), et le dispositif de traitement de données (14) forment une unité compacte d'appareillage (16).

2. Système d'imagerie selon la revendication 1,
caractérisé en ce que le dispositif de traitement de données (14), dans le sens d'une unité de correction d'image, est programmé pour compenser des défauts d'imagerie optiques, en particulier des distorsions par suite d'un réglage insuffisant de la courbure de surface des lentilles souples (1).

3. Système d'imagerie selon une des revendications 1 à 2,
caractérisé en ce que la programmation du dispositif de traitement de données (14) est prévue pour régler la luminosité de l'image reçue par le capteur d'image (8) de façon dépendant des valeurs respectives du réglage de l'actionneur 15) (c'est-à-dire de la courbure de surface des lentilles souples (1)).

4. Système d'imagerie selon la revendication 3,
caractérisé en ce que le réglage de luminosité est effectué en influençant le temps d'exposition et l'amplification des signaux délivrés par le capteur d'image (8).

5. Système d'imagerie selon une des revendications 1 à 4,
caractérisé en ce que les lentilles souples (1) sont formées, dans la partie utilisée pour le trajet des rayons de la lumière, en une matière unitaire souple, transparente.

6. Système d'imagerie selon une des revendications 1 à 4,
caractérisé en ce que les lentilles souples sont réalisées comme corps creux remplis de liquide (6), au moins une des surfaces externes, se trouvant dans le trajet des rayons, de la lentille étant formée, à chaque fois, comme membrane souple (5, 5a à 5e) en une matière souple transparente.

7. Système d'imagerie selon la revendication 6,
caractérisé en ce que les deux surfaces externes de la lentille souple sont réalisées comme membrane souple (5, 5a à 5e).

8. Système d'imagerie selon une des revendications 6 à 7,
caractérisé en ce que le liquide à l'intérieur du corps creux (6) présente une faible dispersion.

9. Système d'imagerie selon une des revendications 6 à 8,
caractérisé en ce que le volume interne du corps creux (6) est petit pour limiter étroitement la pression hydrostatique du liquide.

10. Système d'imagerie selon une des revendications 6 à 9,
caractérisé en ce que l'épaisseur des membranes (5, 5a-5e) est différente de l'axe optique vers la périphérie de la lentille.

11. Système d'imagerie selon une des revendications 1 à 10,
caractérisé en ce que, pour compenser des aberrations, des structures de diffraction sont agencées sur les surfaces des lentilles souples.

12. Système d'imagerie selon une des revendications 1 à 11,
caractérisé en ce que l'actionneur (15) pour modifier la courbure de surface de la lentille souple (1) est formée par des actionneurs piézoélectriques (3) qui sont agencés à la périphérie de la lentille souple.

13. Système d'imagerie selon une des revendications 2 à 11,
caractérisé en ce que la courbure de surface de la lentille souple peut être modifiée en influençant le volume de remplissage du corps creux (6) au moyen de l'actionneur (15) réalisé comme dispositif d'alimentation en liquide (13).

14. Système d'imagerie selon une des revendications 1 à 13,
caractérisé en ce qu'au moins une lentille usuelle (2) est disposée dans le trajet des rayons de la lumière à une distance axiale fixe des lentilles souples.

15. Système d'imagerie selon une des revendications 1 à 14,
caractérisé en ce qu'au moins un diaphragme est disposé dans le trajet des rayons de la lumière.

16. Système d'imagerie selon la revendication 15,
caractérisé en ce que le diaphragme est constitué d'un corps creux qui est formé entre deux membranes (5) transparentes, souples, étroitement espacées et est rempli d'un liquide non transparent (12), les membranes opposées sous forme d'une surface circulaire pouvant être amenées en contact direct l'une avec l'autre, avec un diamètre souhaité, par modification de la pression différentielle entre la surface externe des membranes et l'intérieur du corps creux.
